# EUROPEAN PATENT SPECIFICATION

(11) **EP 1 510 451 B1**
(45) Date of publication and mention of the grant of the patent: **05.12.2012**
(21) Application number: 04016564.9
(22) Date of filing: 14.07.2004
(51) Int. Cl.: B62M 9/16, B62J 13/00

(54) **Chain guide**
Kettenführungsschiene
Guide pour chaîne

(30) Priority: 29.08.2003 JP 2003307343
(43) Date of publication of application: 02.03.2005
(73) Proprietor: HONDA MOTOR CO., LTD., Tokyo (JP)
(72) Inventor: Gogo, Kazuhiko, 4-1, Chuo 1-chome Wako-shi Saitama (JP)
(74) Representative: Rupp, Christian

(56) References cited:
- EP-A- 0 713 823
- JP-A- 5 193 549
- JP-A- 6 183 536
- JP-A- 58 178 043
- US-A- 5 679 084
- US-A1- 2002 007 978

## Description

### [Technical Field]

The present invention relates to a chain guide for a motorcycle for preventing a chain wound around a rear sprocket of a rear wheel from coming off due to a swinging motion of a rear swing arm.

### [Background Art]

A chain guide provided at the rear portion of the rear swing arm for preventing a chain from coming off a sprocket due to vibrations of the rear swing arm or the like under harsh traveling conditions, such as a case in which the vertical amplitude of vibrations of the rear swing arm is significantly large, is in practical use.

However, the chain guide comes into contact with the chain during travel at the position of installation thereof. Therefore, abrasion of the chain guide is inescapable, and hence a chain guide which is formed of resin or the like and the strength and the rigidity thereof are compensated for by a guide holder is proposed (For example, see JP-UM-B-5-20637.

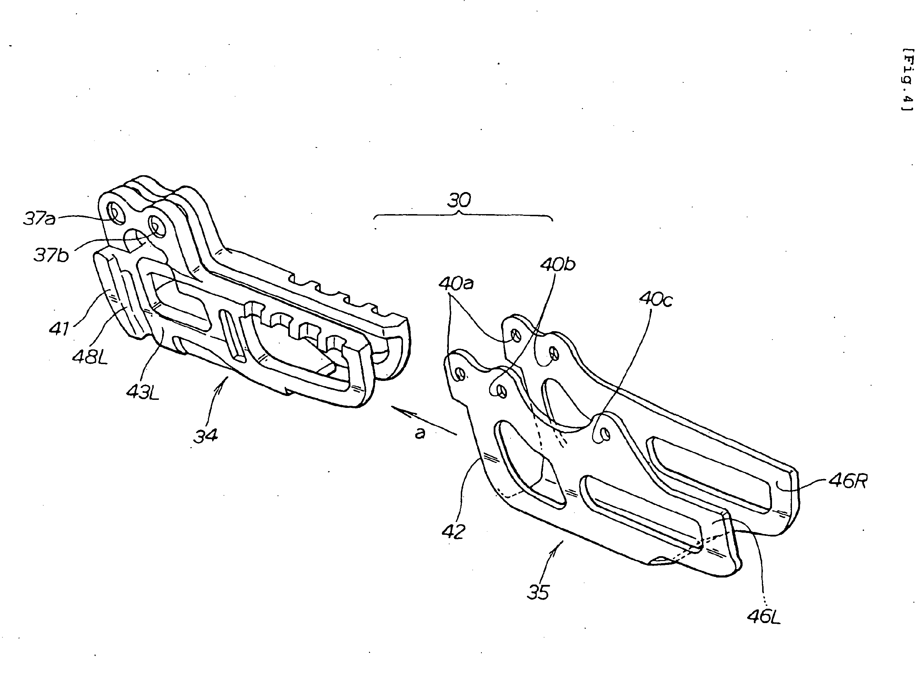

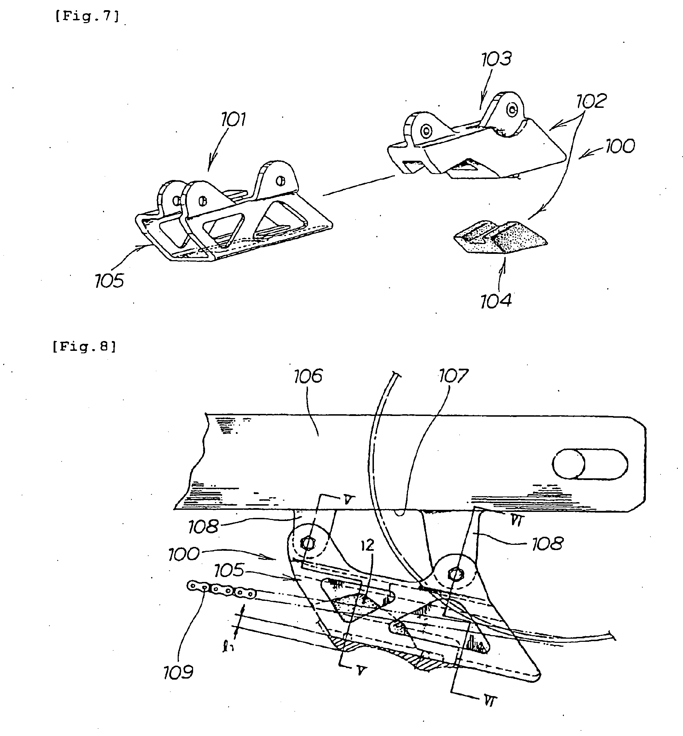

Fig. 7 is a cited drawing from Fig. 4 of said prior art document. However, components are renumbered and the names of the components are partly changed.
A chain guide 100 includes a guide holder 101 having a substantially U-shape in cross section and formed of metal such as aluminum, and a chain guide member 102 formed of resin or the like for fitting into the guide holder 101. A chain comes into contact with the chain guide member 102. When they come into contact many times, abrasion of the chain guide member 102 is resulted.

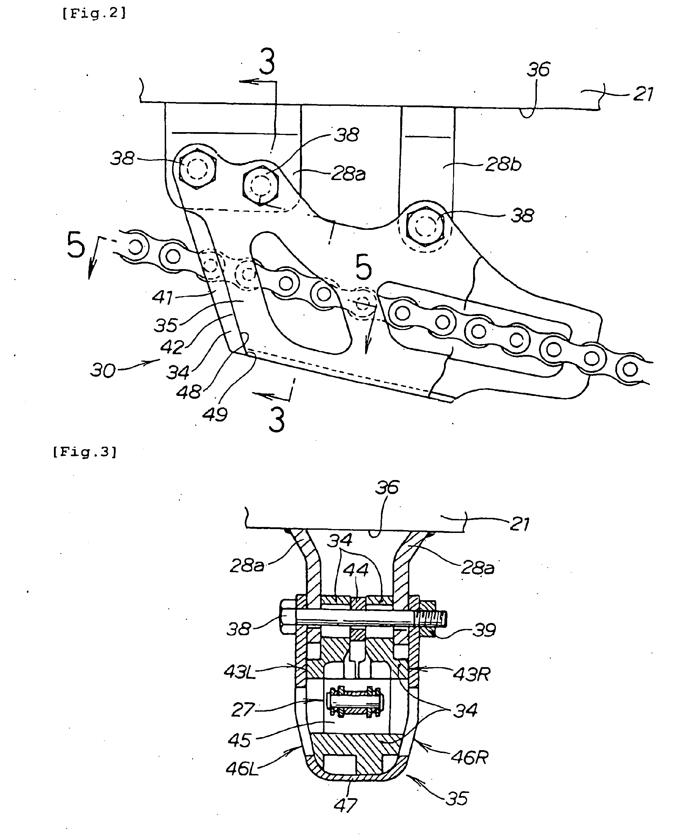

Fig. 8 is a cited view from Fig. 2 of said prior art document. Reference numerals 101, 102 are cited from Fig. 7. The chain guide 100 is attached to the lower rear surface 107 of the rear swing arm 106 via a mounting stay 108. At a chain introducing portion 105 of the chain guide 100, the chain guide member 102 is subjected to a large amount of abrasion.

Since the chain guide member 102 and the guide holder 101 are placed in flush with each other on the side surface of the introducing portion, a chain 109 may come into contact with the guide holder 101 in association with a swinging motion of the rear swing arm 106. When durability is considered to avoid mutual influence between the guide holder 101 and the chain 109, which are both formed of metal, even when they come into contact, upsizing of the device, or increase in costs are inevitable.

Also, assuming that the guide holder is deformed or scarred due to contact or the like between the guide holder and the chain and it takes time for replacement thereof, in the case of off-road motorcycle racing, for example, it may affect the result of the race. Therefore, easy assemble-ability and disassemble-ability of the guide holder are desired.

Both documents JP 05-193549 A and JP 58-178043 A each show a chain guide according to the preamble of claim 1.

### [Problems to be Solved by the Invention]

It is an object of the present invention to provide a chain guide which can prevent deformation and scarring of the guide holder, and can be assembled and disassembled easily.

The invention according to Claim 1 is a chain guide including a chain guide member which comes into contact with a chain, a guide holder for holding the chain guide member, and the guide holder being mounted to the swing arm, characterized in that a flange is provided at a front end of the chain guide member and a front end of the guide holder is retained rearwards of the flange by bringing the front end position of the guide holder under control of the flange.

The flange is provided at the extremity of the chain guide member to which the chain is introduced, and the position of the front end of the guide holder is brought under control of the flange.

Since the flange at the extremity of the chain guide member is adapted to cover the extremity of the guide holder, the chain comes into contact with the chain guide member, and hence the chain does not come into direct contact with the extremity of the guide holder. In other words, the chain guide member absorbs an impact generated by contact of the chain.

During off-road traveling on the rutted ground, interference between the guide holder and the surface of the ground may occur. In the related art, since the guide holder and the surface of the ground interfere directly with each other, scarring and/or deformation of the guide holder had occurred. According to the present invention, since the extremity of the chain guide is defined by the chain guide member, scarring and/or deformation of the guide holder hardly occur.

Consequently, the light-weight and compact chain or the guide holder can be formed, and in addition, occurrence of scarring and/or deformation of the guide holder due to contact of the chain can be reduced. Furthermore, since occurrence of the scarring on the guide holder is reduced, frequency of maintenance such as repair and/or replacement of the guide holder may be reduced.

The invention according to Claim 2 is characterized in that the guide holder is formed by bending the lower ends of the left and right walls inward and connected at the bottom, so as to be formed into a substantially U-shape with the left and right walls tapered downward.
Since the guide holder is formed into the substantially U-shape with the left and right walls tapered downward, the possibility of reception of impact from below or from sides by, for example, stones or obstacles, may be reduced.
As a consequence, the possibility of deformation and breakage of the guide holder or of the mounting stay may be reduced.

The invention according to Claim 3 is characterized in that the guide holder is formed of an extruded member of aluminum alloy.

The guide holder is formed of the extruded member of the aluminum alloy. In other words, it can be formed only by cutting and machining, and a pressing process is not necessary. Since the extruded member of aluminum alloy is used, the portion which requires machining is small, and simultaneously, dimensional accuracy which is higher than the press processing is achieved.

Consequently, the chain guide member can be positioned accurately with respect to the guide holder and assembled easily.
By using the extruded member of aluminum alloy, required processes are only cutting and machining, and many processes including heat processing or pressing as in the related art are not necessary. Since a die for press processing is not necessary, it is advantageous in terms of cost particularly when manufacturing a small amount.

The invention according to Claim 4 is characterized in that the guide holder is formed into a substantially U-shape by dividing the extruded member of substantially hollow square in cross-section into two parts.

Since the guide holder is used by dividing the extruded member of substantially hollow square in cross section into two parts, the cross-sectional shape, in particular, the dimensional accuracy in the direction of width of the extruded member can be utilized as is, and thus a predetermined dimensional accuracy required by the guide holder can be secured easily and reliably.

Also, since the guide holder is formed by using the extruded member of a substantially hollow square in cross section, the packed state for transportation is stable in comparison with the material of irregular shape in cross section, and thus the possibility of collapse of cargo piles can be reduced.

As a consequence, the chain guide member can be positioned accurately and assembled easily with respect to the guide holder.

The invention according to Claim 5 is characterized in that the left and right walls and the bottom portion connecting the lower ends of these walls constituting the guide holder are adapted in such a manner that the bottom portion is formed to be thinner than the left and right walls.
Since the guide holder is formed of the extruded member, the bottom portion can be formed to be thinner'than the left and right walls.
By forming the bottom portion of the guide holder to be thinner than the left and right walls, which corresponds to the stay mounting portion, the strength of the stay mounting portion is secured while reducing the weight of the guide holder.

The invention according to Claim 6 is characterized in that the guide holder is formed into a substantially U-shape by dividing an extruded member of a substantially hollow square in cross section into two parts.

Since the guide holder is used by dividing the extruded member of substantially hollow square in cross section into two parts, the cross sectional shape, in particular, the dimensional accuracy in the direction of width of the extruded member can be utilized as is, and thus a predetermined dimensional accuracy required by the guide holder can be secured easily and reliably.

Also, since the guide holder is formed by using the extruded member of substantially hollow square in cross section, the packed state for transportation is stable in comparison with the material of irregular shape in cross section, and thus the possibility of collapse of cargo piles can be reduced.

As a consequence, the chain guide member can be positioned accurately and assembled easily with respect to the guide holder.

The invention according to Claim 7 is characterized in that the left and right walls and the bottom portion connecting the lower ends of these walls constituting the guide holder are adapted in such a manner that the bottom portion is formed to be thinner than the left and right walls.
Since the guide holder is formed of the extruded member, the bottom portion can be formed to be thinner than the left and right walls.
By forming the bottom portion of the guide holder to be thinner than the left and right walls, which corresponds to the stay mounting portion, the strength of the stay mounting portion is secured while reducing the weight of the guide holder.

According to the invention of Claim 1, since scarring of the guide holder due to contact with the chain is eliminated, frequency of maintenance of the guide holder can advantageously be reduced.

According to the invention of Claim 2, since the guide holder is formed into a substantially U-shape in which the left and right walls are tapered downward, deformation and damages of the guide holder or the mounting stay can. be advantageously reduced.

According to the invention of Claim 3, since the extruded member of aluminum alloy is applied, the amount of machining may be less than a method of cutting out a guide holder from a plate member. Since machining is employed, the guide holder with a high degree of accuracy is advantageously obtained.

According to the invention of Claim 4, since the predetermined dimensional accuracy of the guide holder can be secured easily and reliably by forming it into a substantially U-shape by dividing the extruded member of substantially hollow square in cross-section into two parts, the chain guide member can advantageously be positioned accurately and can be assembled easily with respect to the guide holder.

According to the invention of Claim 5, since the bottom portion of the guide holder is formed to be thinner than the left and right walls, the weight of the guide holder can advantageously be reduced while securing the strength.

According to the invention of Claim 6, since the predetermined dimensional accuracy of the guide holder can be secured easily and reliably by forming it into a substantially U-shape by dividing the extruded member of substantially hollow square in cross section into two parts, the chain guide member can be positioned accurately and assembled easily with respect to the guide holder.

According to the invention of Claim 7, since the bottom portion of the guide holder is formed to be thinner than the left and right walls, the weight of the guide holder can advantageously be reduced while securing the strength.

### Brief Description of the Drawings

Fig. 1 is a side view of an off road type motorcycle to which the present invention is applied.
Fig. 2 is an enlarged view of a portion 2 in Fig. 1.
Fig. 3 is a cross-sectional view taken along the line 3-3 in Fig. 2.
Fig. 4 is an exploded perspective view of a chain guide according to the present invention.
Fig. 5 is a cross sectional view taken along the line 5-5 in Fig. 2.
Fig. 6 is a manufacturing flowchart of a guide holder according to the present invention.
Fig. 7 is a cited drawing from Fig. 4 in a prior art document.
Fig. 8 is a cited drawing from Fig. 2 in a prior art document.

Referring now to the attached drawings, best mode for carrying out the invention will be described below. The drawings are to be viewed so that reference numerals are to be seen in a right way.

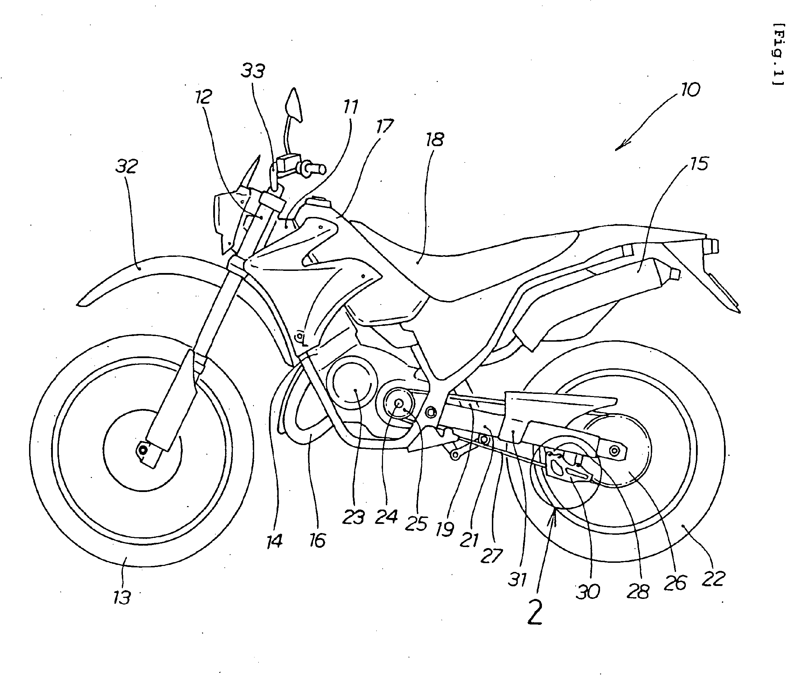

Fig. 1 is a side view of an off-road type motorcycle to which the present invention is applied. The motorcycle 10 includes a main frame 11, a front fork 12 steerably attached at the front of the main frame 11, a front wheel 13 attached to the lower end of the front fork 12, an engine 14 suspended from the main frame 11, an exhaust pipe 16 for flowing exhaust gas discharged from the engine 14 to a muffler 15, a fuel tank 17 and a rider's seat 18 disposed on the main frame 11 from the front to the rear, a swing arm 21 attached to the rear of the main frame 11 via a rear cushion 19 so as to be capable of a vertical movement, and a rear wheel 22 attached at the rear end of the swing arm 21.

A power transmission system mainly includes the engine 14, a transmission 23 provided below the engine 14, a drive gear 25 attached to an output shaft 24 of the transmission 23, a sprocket 26 attached to the rear wheel 22, and a chain 27 wound around the sprocket 26 and the drive gear 25.

A chain guide 30 is attached to the lower surface of the rear portion of the swing arm 21 attached to the main frame 11 so as to be capable of a vertical movement via a mounting stay 28.
The reference numeral 31 designates a chain cover, reference numeral 32 designates a front fender, and reference numeral 33 designates a handle.

The chain guide 30 encloses the chain 27 wound around the sprocket 26 so as to prevent the chain 27 wound around the sprocket 26 attached on a shaft of the rear wheel 22 for transmitting the drive power from coming off the sprocket 26 due to the vertical movement of the swing arm 21 and controls deflection of the chain 27 so as not to exceed a predetermined extent. In other words, it has a function to guide the chain 27 so as not to come off the sprocket 26 by controlling deflection of the chain 27.

Fig. 2 is an enlarged view of a portion 2 in Fig. 1. The chain guide 30 includes a chain guide member 34 formed of abrasion resistant resilient material such as polyurethane rubber and a guide holder 35 of high-strength aluminum alloy. Mounting stays 28a, 28b are mounted to the lower surface 36 of the swing arm, and the chain guide member 34 and the guide holder 35 are fixed to the stays 28a, 28b via bolts 38 and nuts, not shown.
A flange 41 is provided at the front end of the chain guide member 34, and the flange 41 is disposed so as to protrude from the front end 42 of the guide holder 35.

Fig. 3 is a cross-sectional view taken along the line 3-3 in Fig. 2, including the chain guide member 34 attached to the mounting stay 28a mounted to the lower surface 36 of the swing arm via the bolts 38 and the nuts 39, the guide holder 35 attached to the mounting stay 28a via the bolt 38 and nut 39 while fitting on the outer surface 43L, 43R of the chain guide member 34, and a collar 44 fitted into the center of the chain guide member 34 via the bolt 38 and the nut 39.
The drawing also shows that the chain 27 is passed through an opening 45 formed at the center of the chain guide member 34.

The guide holder 35 is formed into a substantially U-shape by bending the lower ends of right and left walls 46L, 46R inward and connecting at the bottom portion 47 so that the left and right walls are tapered downward.
Since the guide holder 35 is formed in such a manner that the left and right walls 46L, 46R are tapered downward, the possibility of reception of impact from below or from sides by, for example, stones or obstacles, may be reduced.
As a consequence, the possibility of deformation and scarring of the guide holder 35 may be reduced.

In addition, the left and right walls 46L, 46R and the bottom portion 47 connecting the walls constituting the guide holder 35 are adapted in such a manner that the bottom portion 47 is formed to be thinner than the left and right walls.
Since the guide holder 35 is formed of the extruded member of substantially hollow square in cross section, the thickness of the bottom portion 47 can be formed to be thinner than the thickness of the left and right walls 46L, 46R, respectively.

Consequently, by forming the left and right walls 46L, 46R of the guide holder 35 which corresponds to a mounting portion for the mounting stay 28a thicker than the thickness of the bottom portion 47, and the thickness of the bottom portion 47 thinner, the weight of the guide holder 35 can be reduced while securing the strength of the left and right walls 46L, 46R which' corresponds to the stay mounting portion.

Fig. 4 is an exploded perspective view of a chain guide according to the present invention, and the chain guide 30 can be formed by fitting the guide holder 35 to the chain guide member 34 as indicated by an arrow a.
The flange 41 is provided at the front end of the chain guide member 34 and the front end 42 of the guide holder 35 is retained rearwards of the flange 41 by bringing the position of the front end 42 of the guide holder 35 under control of the flange 41.

A guide member extension is extended on top of the chain guide member 34, and the guide member extension is formed with guide member mounting holes 37a, 37b.
On the other hand, the guide holder 35 is formed with guide holder mounting holes 40a, 40b, 40c on the upper portion thereof. The guide member mounting hole 37a is aligned with the guide holder mounting hole 40a and the guide member mounting hole 37b is aligned with the guide holder mounting hole 40b, so as to be capable of being fixed to the mounting stay 28a via the bolt 38 and the nut 39 (See Fig. 3).

The guide holder mounting holes 40a, 40b are formed so as to align with the holes of the mounting stay 28a (See Fig. 3), so as to be capable of being fixed to the mounting stay 28a via the bolt 38 and the nut 39. In the same manner, the guide holder mounting hole 40c is formed so as to align with the hole on the mounting stay 28b (See Fig. 2), so as to be capable of being fixed to the mounting stay 28b via the bolt 38 and the nut 39.

The guide holder 35 is formed of the extruded member of aluminum alloy. That is, only cutting and machining is needed, and the pressing process is not necessary. Since the extruded member of aluminum alloy is used, the portion requiring the machining is small, and simultaneously, a higher dimensional accuracy than the press processing is obtained.

Consequently, since the guide holder 35 can obtain the higher dimensional accuracy than the press processing, the chain guide member 34 can be positioned accurately and assembled easily with respect to the guide holder 35.

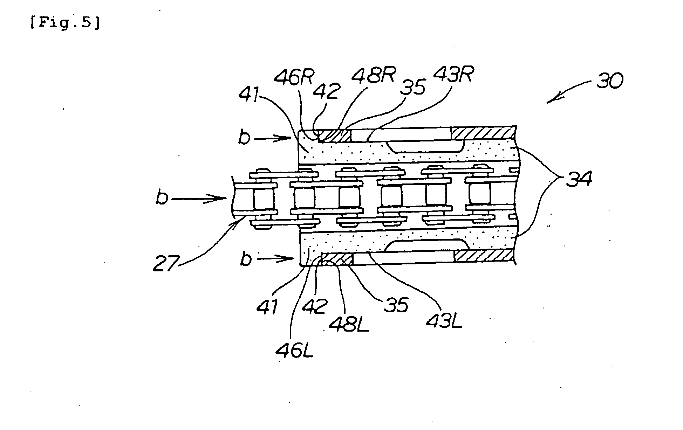

Fig. 5 is a cross sectional view taken along the line 5-5 in Fig. 2 showing that the flange 41 is provided at a front end of the chain guide member 34 and a front end 42 of the guide holder 35 is retained rearwards of the flange 41 by bringing the front end 42 of the guide holder 35 under control of the flange 41, as described above.

The flange 41 includes formed left and right back side surfaces 48L, 48R, and the back bottom surface 49 (see Fig. 2) clamped between the left and right back side surfaces 48L, 48R. Then, the chain guide 30 is formed by bringing the left and right walls 46L, 46R of the front end 42 of the guide holder 35 into abutment with the left and right back side surfaces 48L, 48R, and bringing the bottom portion 47 at the front end 42 of the guide holder 35 into abutment with the back bottom surface 49.

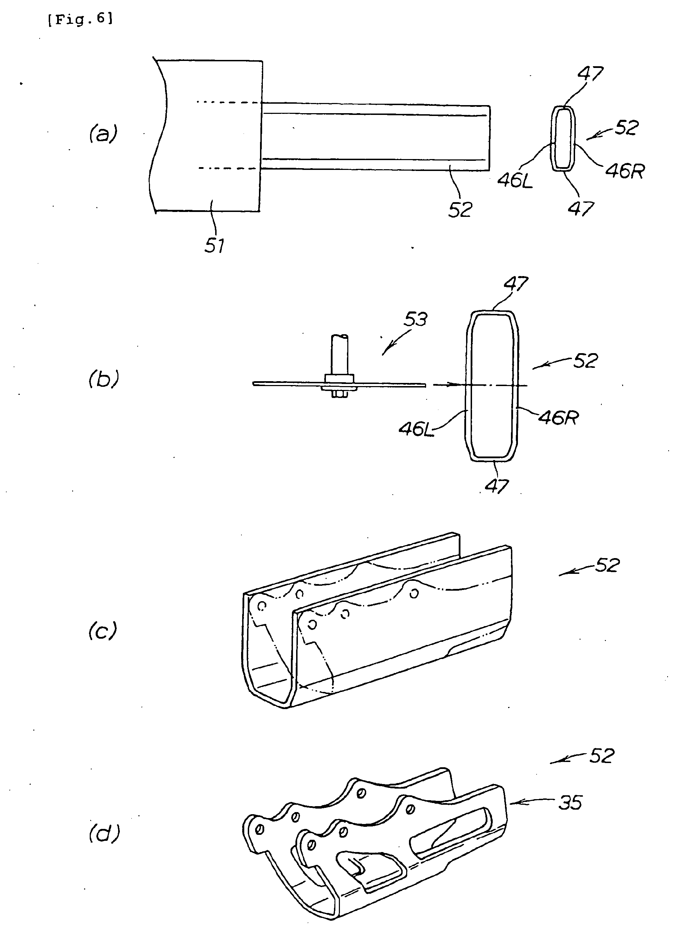

Fig. 6 is a manufacturing flowchart for the guide holder according to the present invention.
The drawing (a) shows that the extruded member 52 of aluminum alloy having a predetermined cross-section is formed by an extruding die 51.
In other words, the extruded member 52 of the aluminum alloy is formed into substantially U-shape with the left and right walls 46L, 46R tapered downward, and the thickness of the bottom portion 47 is formed to be thinner than the thickness of the left and right walls 46L, 46R.

Since the guide holder is formed by using the extruded member 52 of a hollow square in cross section, the packed state for transportation is stable in comparison with the material of irregular shape in cross section, and thus the possibility of collapse of cargo piles can be reduced.

The drawing (b) shows that the extruded member of aluminum alloy can be divided into two parts by cutting means 53 such as a revolving saw or the like.
Since the extruded member 52 of a hollow square in cross section can be formed into a U-shape by dividing it into two parts, the extruding member 52 can be utilized effectively.

Since the extruded member 52 of substantially hollow square shape in cross section is used by dividing into two parts, the cross sectional shape or the dimensional accuracy of the extruded member 52 can be effectively utilized as is, a predetermined dimensional accuracy required for the guide holder 35 (See Fig. 2) can be secured easily and reliably.
Means for dividing the extruded member 52 is not limited to the cutting means. For example, it is allowed to be cut by thermal processing means such as laser or welding.

The drawing (c) shows that the extruded member 52 formed into substantially U-shape by dividing into two parts can be processed to a predetermined shape by removing means such as cutting.
Since the extruded member 52 is used, the portion requiring machining is small, and a higher dimensional accuracy than a method of press processing is obtained.

By utilizing the extruded member 52 of aluminum alloy, thermal processing which corresponds to T5 is performed simultaneously during the extruding process, and hence a strength equivalent to the high-strength aluminum alloy which is used in the guide holder in the related art is secured. Therefore, the required process is only machining, and hence a number of processes such as thermal processing, pressing, bending, solution annealing, aging treatment, precision alignment is not necessary. Since the die for pressing process is not necessary, in particular, it is advantageous in terms of cost particularly when manufacturing a small amount.

Although the means for processing the extruded member 52 divided into two parts into a predetermined shape is removing means by cutting in the embodiment, the method is not limited thereto. For example, it is also possible to process by thermal processing means such as laser or welding. An optimal method is to be selected by considering constraint conditions in manufacture such as processing accuracy, equipment held, or cycle time required for processing.

The drawing (d) shows a completed guide holder 35.

The operation of the chain guide thus constructed will be described below.
Referring back to Fig. 5, in the chain guide 30, the flange 41 is provided at a front end of the chain guide member 34 and the front end 42 of the guide holder 35 is retained rearwards of the flange 41 by bringing the front end 42 of the guide holder 35 under control of the flange 41.

Since it is constructed such that the flange 41 at the extremity of the chain guide member 34 covers the extremity of the guide holder, the chain 27 advances as indicated by an arrow b, and part of the chain 27 comes into contact with the chain guide member 34 due to external causes, so that a force is exerted on the flange 41 of the chain guide member 34 as indicated by an arrow b.

Since the flange 41 is applied with the force of arrow b, is fixed by the flange 41, the bolt 38 (see Fig. 3), and the nut 39, and is covered by the guide holder 35 along the outer surfaces 43L, 43R of the chain guide member 34, the chain guide member 34 is prevented from coming off.

In the chain 27 introducing portion, since the outside of the guide holder 35 is covered by the chain guide member 34, the chain 27 does not come into direct contact with the extremity 42 of the guide·holder 35. In other words, an impact due to contact of the chain 27 can be absorbed by the chain guide member 34, and in addition, impact due to contact of the chain guide 30 with respect to the surface of the road during off-road travel can also be absorbed and alleviated by the chain guide member 34. In addition, by using the abrasion resistance resilient member for the chain guide member 34, impact absorbing property may be improved.

Consequently, scarring, deformation, and the like of the guide holder 35 can be reduced. Since scarring of the guide holder 35 is reduced, frequency of maintenance such as repair and/or replacement of the guide holder 35 may be reduced.

Although the material of the guide holder according to the present invention is extruded material of aluminum alloy in the embodiment, iron, magnesium, titanium, or an alloy thereof are allowed to use. Selection of the material is to be made considering required durability, strength, weight, dimensional accuracy, processability, and/or costs.
It is also possible to apply the chain guide of the present invention for a general vehicle having a chain and sprocket for preventing the chain from coming apart.

Also, the chain guide of the invention can be widely applied to a motorcycle, a tricycle and vehicles for work.

The chain guide of the present invention is e.g. suitable for a motorcycle.

### Reference Numerals

- 30: chain guide,
- 34: chain guide member,
- 35: guide holder,
- 41: flange,
- 42: front end of guide holder,
- 46L, 46R: walls of guide holder,
- 47: bottom portion of guide holder,
- 48: backside surface of flange,
- 51: extruding die,
- 52: extruded member

## Claims

1. A chain guide comprising:
a chain guide member (34) which comes into contact with a chain;
a guide holder (35) for holding the chain guide member (34), the guide holder (35) being mounted to the swing arm,
**characterized in that**
a flange (41) is provided at a front end portion of the chain guide member (34) and a front end of the guide holder (35) is retained rearwards of the flange by bringing the front end position of the guide holder (35) under control of the flange (41).

2. The chain guide according to Claim 1, **characterized in that** the guide holder (35) is formed by bending the lower ends of left and right walls (46L, 46R) thereof inward and connected at the bottom portion (47), so as to be formed into a substantially U-shape with the left and right walls (46L, 46R) tapered downward.

3. The chain guide according to Claim 1 or Claim 2, **characterized in that** the guide holder (35) is formed of an extruded member (52) of aluminum alloy.

4. The chain guide according to Claim 3, **characterized in that** the guide holder (35) is formed into a substantially U-shape by dividing the extruded member (52) of substantially hollow square in cross-section into two parts.

5. The chain guide according to Claim 3 or Claim 4, **characterized in that** the left and right walls (46L, 46R) and the bottom portion (47) connecting the walls (46L, 46R), which constitute the guide holder (35), are adapted in such a manner that the bottom portion (47) is formed to be thinner than the left and right walls.

6. The chain guide of claim 1, wherein the guide holder (35) is formed into a substantially U-shape by dividing an extruded member (52) of a substantially hollow square in cross section into two parts.

7. The chain guide according to Claim 6, wherein the left and right walls (46L, 46R) and the bottom portion (47) connecting the lower ends of these walls (46L, 46R), which constitute the guide holder (35), are adapted in such a manner that the bottom portion (47) is formed to be thinner than the left and right walls (46L, 46R).

## Patentansprüche

1. Eine Kettenführung
aufweisend:
ein Kettenführungselement (34), welches in Kontakt mit der Kette kommt;
einen Führungshalter (35), welcher das Kettenführungselement (34) hält,
wobei der Führungshalter (35) an dem Schwingenarm montiert ist, **dadurch gekennzeichnet, dass** ein Flansch (41) am vorderen Endabschnitt des Kettenführungselements (34) vorgesehen ist und ein vorderer Teil des Führungshalters (35), hinter dem Flansch gehalten ist, in dem die Stirnseite des Führungshalters (35) durch den Flansch (41) anliegt.

2. Kettenführung nach Anspruch 1, **dadurch gekennzeichnet, dass** der Führungshalter (35) dadurch geformt ist, indem die unteren Enden der linken und rechten Seitenwände (46L,46R) etwas nach innen gebogen sind, und am unteren Teil (47) miteinander verbunden sind, so dass m Wesentlichen eine U-Form entsteht, wobei die linke und rechte Seitenwand (46L,46R) nach unten hin konisch zulaufen.

3. Kettenführung nach Anspruch 1 oder Anspruch 2, **dadurch gekennzeichnet, dass** der Führungshalter (35) aus einem extrudierten Strang (52) einer Aluminiumlegierung geformt ist.

4. Kettenführung nach Anspruch 3, **dadurch gekennzeichnet, dass** der Führungshalter (35) in eine im wesentlichen U-Form gebracht ist, indem ein extrudierter Strang (52) eines, im wesentlichen, hohlen Querschnitts in zwei Teile geteilt wurde.

5. Kettenführung nach Anspruch 3 oder Anspruch 4, **dadurch gekennzeichnet, dass** die linke und rechte Seitenwand (46L,46R) und das untere, die Seitenwände (46L,46R) verbindende Teilstück (47), welche den Führungshalter (35) bilden, in solcher Art und Weise adaptiert sind, dass das untere Teilstück (47) dünner geformt ist als die linke und rechte Seitenwand.

6. Kettenführung nach Anspruch 1, wobei der Führungshalter (35) in eine, im wesentlichen, U-Form gebracht ist, indem ein extrudierter Strang (52) eines, im wesentlichen hohlen Rechteckquerschnitts in zwei Teile geteilt wurde.

7. Kettenführung nach Anspruch 6, wobei die linke und rechte Seitenwand (46L,46R) und das untere, die Seitenwände (46L,46R) verbindende Teilstück (47), welche den Führungshalter (35) bilden, derart adaptiert sind, dass das untere Teilstück (47) dünner geformt ist als die linke und rechte Seitenwand.

## Revendications

1. Guide-chaîne comprenant :
un organe de guide de chaîne (34) qui vient en contact avec une chaîne ;
un porte-guide (35) pour maintenir l'organe de guide-chaîne (34), le porte-guide (35) étant monté sur le bras oscillant,
**caractérisé en ce que**
une bride (41) est prévue au niveau d'une portion d'extrémité avant de l'organe de guide-chaîne (34) et une extrémité avant du porte-guide (35) est retenue à l'arrière de la bride en amenant la position d'extrémité avant du porte-guide (35) sous le contrôle de la bride (41).

2. Guide-chaîne selon la revendication 1, **caractérisé en ce que** le porte-guide (35) est formé en courbant ses extrémités inférieures de parois gauche et droite (46L, 46R) vers l'intérieur et raccordé à la portion inférieure (47), de façon à être formé sensiblement en forme de U avec les parois gauche et droite (46L, 46R) effilées vers le bas.

3. Guide-chaîne selon la revendication 1 ou la revendication 2, **caractérisé en ce que** le porte-guide (35) est formé d'un organe extrudé (52) en alliage d'aluminium.

4. Guide-chaîne selon la revendication 3, **caractérisé en ce que** le porte-guide (35) est formé sensiblement en forme de U en divisant l'organe extrudé (52) de forme sensiblement carrée creuse en coupe en deux parties.

5. Guide-chaîne selon la revendication 3 ou la revendication 4, **caractérisé en ce que** les parois gauche et droite (46L, 46R) et la portion inférieure (47) raccordant les parois (46L, 46R), qui constituent le porte-guide (35) sont adaptées de telle sorte que la portion inférieure (47) est formée pour être plus mince que les parois gauche et droite.

6. Guide-chaîne selon la revendication 1, dans lequel le porte-guide (35) est formé sensiblement en forme de U en divisant un organe extrudé (52) de forme sensiblement carrée creuse en coupe en deux parties.

7. Guide-chaîne selon la revendication 6, dans lequel les parois gauche et droite (46L, 46R) et la portion inférieure (47) raccordant les extrémités inférieures de ces parois (46L, 46R), qui constituent le porte-guide (35), sont adaptées de telle sorte que la portion inférieure (47) est formée pour être plus mince que les parois gauche et droite (46L, 46R).
